# FASCICULE DE BREVET EUROPEEN

(11) **EP 0 624 399 B1**
(45) Date de publication et mention de la délivrance du brevet: **27.01.1999**
(21) Numéro de dépôt: 94401010.7
(22) Date de dépôt: 06.05.1994
(51) Int. Cl.: B01J 23/76, B01J 23/89, B01J 37/02, B01J 37/00

(54) **Procédé de préparation d'un catalyseur utilisable notamment dans le traitement des gaz d'echappement des moteurs à combustion interne**
Verfahren zur Herstellung eines Katalysators insbesondere verwendbar für die Behandlung von Abgasen von Verbrennungsmotoren
Preparation process of a catalyst usable for treating exhaust gasses from internal combustion engines

(30) Priorité: 14.05.1993 FR 9305947
(43) Date de publication de la demande: 17.11.1994
(73) Titulaire: INSTITUT FRANCAIS DU PETROLE, 92502 Rueil-Malmaison (FR)
(72) Inventeur: Durand, Daniel, F-92500 Rueil Malmaison (FR); Guibard, Isabelle, F-92500 Rueil Malmaison (FR); Gil, Mabilon, F-78420 Carrieres sur Seine (FR)

(56) Documents cités:
- EP-A- 0 125 565
- EP-A- 0 385 123
- EP-A- 0 397 644
- DE-A- 4 032 845
- US-A- 4 916 105

## Description

La présente invention a pour objet un procédé de fabrication de catalyseurs de post combustion automobile sur supports métalliques ou céramiques ou autres matériaux inorganiques réfractaires. Elle a également pour objet les catalyseurs obtenus par ce procédé.

Ces catalyseurs peuvent être mis en oeuvre, par exemple, dans le traitement des gaz d'échappement des moteurs à combustion interne, à allumage commandé ou non, fonctionnant avec un carburant liquide, un gaz liquéfié de pétrole (GPL) ou un gaz naturel comprimé (GNC).

Pour que les supports de type monolithe à structure en nid d'abeille ou obtenus par empilement de feuillards métalliques ou encore réalisés par l'enchevêtrement de fibres, soit métalliques soit céramiques, puissent recevoir une phase catalytiquement active (métaux précieux en général) et en assurer une bonne dispersion (l'activité catalytique étant généralement proportionnelle à la surface métallique exposée), il est important que leur surface spécifique (peu différente de la surface géométrique et égale à quelques m² par litre de support) soit fortement accrue. Le recouvrement de la surface du support par un oxyde inorganique réfractaire de grande surface (100 à 200m²/g) est un moyen pour y parvenir.

D'autres critères sont également exigés pour que le catalyseur soit performant: en effet, pour que les performances catalytiques ne soient pas trop dépréciées par des modifications rapides et intermittentes des conditions opératoires, ou pour apporter une certaine stabilité au catalyseur (stabilité thermique du support et/ou de la phase catalytique, moins de sensibilité aux poisons potentiels), il est souhaitable d'ajouter à cet oxyde inorganique de grande surface des composés capables d'atténuer l'amplitude de ces effets perturbateurs.

Il est connu de l'homme de l'art que les oxydes de cérium et de fer (notamment US-A-4378-307 et US-A-4294-726), ou d'autres oxydes tels que ceux de terres rares ou de métaux alcalino-terreux ou encore de zirconium (USA-4587-231 ou US-A-4791-091 ou FR-A-2568143) peuvent conduire à ces améliorations.

En général, ces agents sont introduits soit sous forme de pigments dans la suspension d'enduction, soit par imprégnation de sels précurseurs sur l'oxyde réfractaire avant mise en suspension, soit par imprégnation du monolithe enduit.

On a maintenant découvert une nouvelle technique pour introduire ces oxydes, en particulier de fer et de cérium, dans le catalyseur, tout en renforcant leurs effets bénéfiques sur l'activité. Elle consiste, d'une manière générale, à mélanger intimement l'oxyde inorganique réfractaire avec une solution des sels précurseurs d'oxydes de cérium et de fer, et éventuellement d'autres oxydes, puis à atomiser la suspension.

Un avantage du procédé est qu'il permet de préparer une poudre contenant à la fois des oxydes de cérium et de fer intimement liés à l'oxyde inorganique réfractaire et de taille de cristallites inférieure à 50 Å et des oxydes ayant peu ou pas d'interaction avec l'oxyde inorganique et qui présentent des tailles de cristallites légèrement supérieures (une centaine d'angströms).

L'invention fournit donc un procédé de fabrication d'un catalyseur renfermant au moins un oxyde inorganique réfractaire, au moins un oxyde de fer et au moins un oxyde de cérium, au moins un métal A, et éventuellement au moins un composé de métal B, déposés sous forme d'une couche poreuse ("wash coat") sur un support céramique ou métallique, ledit procédé étant caractérisé, d'une manière générale, en ce qu'il comprend :
- une étape (a), dans laquelle on atomise dans un appareillage d'atomisation une suspension aqueuse d'au moins une poudre dudit oxyde inorganique réfractaire, contenant au moins un sel soluble de cérium, au moins un sel soluble de fer, éventuellement au moins une partie d'au moins un composé insoluble et/ou d'au moins un sel soluble dudit métal B, éventuellement au moins une partie d'au moins un métal A préalablement déposé par imprégnation d'au moins un de ses précurseurs sur au moins un des constituants solides présents, de manière qu'on recueille une poudre que l'on calcine éventuellement ;
   ledit procédé comprenant en outre :
- une étape (b), dans laquelle on remet en suspension ladite poudre, tout en ajoutant le reste éventuel ou la totalité dudit composé de métal B, ainsi que, éventuellement au moins un agent liant et éventuellement au moins un acide minéral ou organique ;
- une étape (c), dans laquelle on enduit un support céramique ou métallique au moyen de la suspension obtenue dans l'étape (b) ;
- une étape (d), dans laquelle on calcine ledit support enduit ;
- une étape (e), dans laquelle on imprègne ledit support enduit et calciné par le reste éventuel ou la totalité dudit précurseur du métal A ; et
- une étape (f) dans laquelle on active thermiquement ledit support enduit, calciné et imprégné issu de l'étape (e).

L'originalité du procédé de l'invention réside principalement dans la mise en oeuvre préalable de cette étape (a) d'atomisation d'une suspension aqueuse renfermant au moins un mélange d'une poudre d'un oxyde inorganique réfractaire avec une solution d'au moins un sel précurseur d'oxyde de cérium et d'au moins un sel précurseur d'oxyde de fer et éventuellement d'autres composés, solubles ou non, entrant dans la constitution de la couche poreuse (appelée "wash coat") de grande surface, déposée sur le support ou faisant partie de la phase catalytiquement active. La poudre recueillie après atomisation est remise en suspension, éventuellement avec d'autres matériaux, pour pouvoir enduire les supports céramiques ou métalliques et former en surface, après calcination, une fine couche poreuse (quelques dizaines de microns d'épaisseur) de grande surface spécifique (supérieure à 100m²/g). Sur cette couche poreuse est déposée la phase catalytiquement active constituée par au moins un métal désigné par A qui peut être choisi notamment parmi les métaux précieux tels que le platine, le palladium, le rhodium, l'iridium, le ruthénium, l'or et l'argent et/ou les métaux non précieux tels que le rhénium, le cuivre, le nickel, le cobalt, le chrome, le manganèse et le molybdène, ou le mélange de plusieurs de ces métaux.

Plus particulièrement, la première étape (a) du procédé de l'invention peut se décomposer en plusieurs opérations successives, à savoir :
- une étape (i) dans laquelle on broie, à sec ou à l'état humide, un ensemble de constituants solides comprenant ledit oxyde inorganique réfractaire et éventuellement ledit composé insoluble de métal B, de manière à obtenir une poudre de granulométrie moyenne réduite ;
- une étape (ii) dans laquelle on prépare une suspension aqueuse desdits constituants solides broyés, avec addition d'au moins un sel soluble de fer et d'au moins un sel soluble de cérium, éventuellement d'au moins un composé insoluble ou soluble de métal B, éventuellement d'au moins un métal A préimprégné sur au moins un desdits constituants solides broyés, et éventuellement d'au moins un acide minéral ou organique ;
- une étape (iii) dans laquelle on laisse mûrir la suspension ainsi formée ;
- une étape (iv) dans laquelle on atomise dans un appareillage d'atomisation ladite suspension et l'on recueille une poudre ; et éventuellement
- une étape (v) dans laquelle on calcine la poudre ainsi recueillie.

Les supports mis en oeuvre dans le procédé selon l'invention peuvent être des supports céramiques à structure en nid d'abeille, des supports métalliques à structure empilée ou enroulée, des toiles ou des mousses constituées de fibres de silice ou autres matériaux inorganiques réfractaires, ou des monolithes composés par l'enchevêtrement ou le tissage de fibres métalliques. Dans le cas de supports métalliques et pour des conditions d'utilisations particulières (par exemple la post combustion automobile), des aciers inoxydables de type Fecralloy (marque déposée) composés de fer, chrome et aluminium, éventuellement dopés par du cérium, de l'yttrium ou du niobium ou des aciers de type aluminié (acier recouvert par un film micronique d'aluminium) peuvent subir un traitement spécifique (généralement oxydant pour développer une fine couche protectrice d'alumine en surface) pour éviter leur corrosion dans les conditions d'utilisation.

L'oxyde inorganique réfractaire mis en oeuvre selon l'invention peut être une alumine de type alpha, gamma, delta, éta, kappa, khi, rô ou théta, une silice, une silice-alumine, une zéolithe, une silice-magnésie, un oxyde de titane ou de zirconium ou un mélange de plusieurs de ces composés.

Les sels solubles de cérium ou de fer entrant dans la composition de la suspension à atomiser peuvent être des halogénures, des oxalates, des sulfates, des acétates ou, de préférence, des nitrates.

Leurs teneurs massiques, exprimées en pourcent poids d'oxydes CeO₂ et Fe₂O₃ par rapport à l'ensemble de la matière sèche que l'on obtiendrait après séchage et calcination à 1000°C de la suspension à atomiser, sont respectivement comprises entre 0,1 et 40% pour l'oxyde de cérium entre 0,1% et 10% pour l'oxyde de fer. De préférence, elles seront respectivement comprises entre 0,2 et 15% et entre 0,15 et 5% et d'une façon privilégiée entre 0,5 et 6% pour l'oxyde de cérium et 0,2 et 2% pour l'oxyde de fer.

Lorsque les catalyseurs préparés par le procédé de l'invention sont mis en oeuvre dans la conversion et l'élimination des polluants présents dans les gaz d'échappement de moteurs à combustion interne, la phase catalytiquement active est constituée par au moins un élément A choisi dans les groupes VIB, VIIB, VIII et IB de la classification périodique et plus particulièrement : le platine, le rhodium, le palladium, l'iridium, le ruthénium, l'or et l'argent, mais également le rhénium, le cuivre, le cobalt, le chrome, le molybdène, le manganèse ou le mélange de plusieurs de ces métaux.

Une partie ou la totalité de la phase active A peut avoir été introduite dans la suspension à atomiser mais, dans ce cas, cette phase aura été au préalable imprégnée sur l'oxyde réfractaire ou sur tout autre constituant solide de la suspension à atomiser. En général, cette phase active est introduite en imprégnant le support enduit (recouvert de la couche poreuse) par une solution d'un précurseur du métal A.

Afin de conférer au catalyseur une bonne stabilité thermique ou une bonne résistance à l'empoisonnement, des oxydes ou autres composés de métal B appartenant au groupes IA et IIA, au groupe des terres rares (numéros atomiques 57 à 71 compris) ou au groupe IVB de la classification périodique, peuvent éventuellement être ajoutés dans des proportions allant de 0 à 10% et de préférence entse 0 à 5%poids (rapport massique entre la quantité de métal B exprimée en poids d'oxyde et la quantité de matière sèche obtenue après calcination à 1000°C de la suspension à atomiser). Le métal B succeptible d'être présent dans la couche poreuse peut être, par exemple, du rubidium, du césium, du magnésium, du calcium, du strontium ou du baryum, du titane ou du zirconium, ou encore du lanthane, du praséodyme ou du néodyme.

Cette suspension aqueuse peut également être acidifiée par au moins un acide minéral ou organique, par exemple par de l'acide nitrique, de l'acide acétique, de l'acide sulfurique ou de l'acide citrique. La quantité ajoutée par rapport à la masse de la suspension est, en général comprise entre 0 et 5%poids et de préférence entre 0,5 et 3%poids.

La granulométrie de l'oxyde réfractaire et éventuellement du composé insoluble (par exemple oxyde) de métal B est en général, comprise entre 0,1 et 100 microns et de préférence entre 1 et 20 microns. Pour ajuster cette granulométrie, on pourra procéder à un broyage en condition humide soit de la poudre seule, soit de la suspension avant atomisation.

La teneur potentielle en matière sèche de la suspension à atomiser, exprimée par le rapport de la masse de produit sec obtenue après calcination à 1000°C et la masse de la suspension initiale, est généralement comprise entre 5 et 60% et de préférence entre 10 et 50%poids.

Une fraction des sels précurseurs d'oxydes de cérium et de fer, et également du composé de métal B, s'il est soluble, pouvant se lier d'une façon intime avec les composés non solubles de la suspension, un temps d'agitation et de mûrissement peut être prévu à cet effet. Cette période de contact (temps de mûrissement) entre le solide et les sels solubles est comprise par exemple entre 0,5 et 100 heures et de préférence entre 2 et 50 heures.

La température de ce mûrissement peut être comprise entre 0 et 50°C et de préférence entre 10 et 40°C.

La suspension obtenue est ensuite atomisée, en général par injection de la suspension au travers d'une buse alimentée par un courant de gaz chaud circulant à grande vitesse. Cette opération conduit à une évaporation rapide de l'eau de la suspension avec un temps de contact entre le produit à atomiser et le gaz chaud (ou un temps de séjour dans le sécheur) très court. La poudre résultant de cette opération est ensuite séparée du gaz chaud par un système de cyclone. Selon la teneur en matière sèche de la suspension, le rapport entre les débits de suspension et de gaz chaud et, en fonction de la température entrée de ce gaz chaud, le séchage et/ou la calcination de la poudre seront plus ou moins poussés.

Selon le procédé de l'invention, la température maximale, en entrée de l'atomiseur, du gaz chaud qui permettra d'évaporer l'eau de la suspension, de sécher et éventuellement de calciner la poudre obtenue est en général comprise entre 100 et 900°C et de préférence entre 150 et 800°C et d'une manière préférée entre 200 et 700°C. La température du gaz sortant du cyclone aprés séchage est généralement comprise entre 100 et 600°C et de préférence entre 150 et 500°C. Le rapport entre le débit du gaz chaud et le débit de la suspension ne pourra être défini qu'en fonction de la puissance de chauffe du système d'atomisation. Le temps de séjour du mélange gaz-suspension-poudre dépend des paramètres ci-dessus mais également du volume de la zone de séchage de l'atomiseur.

Dans le cas où la température de sortie de l'atomiseur serait insuffisamment élevée pour décomposer les sels précurseurs d'oxyde de cérium ou de fer et éventuellement du composé de métal B, la poudre issue de l'étape d'atomisation pourra être calcinée à une température comprise entre 150 et 900°C et de préférence entre 300 et 700°C.

Pour pouvoir déposer sur les supports céramiques ou métalliques définis ci-dessus la couche poreuse de grande surface spécifique nécessaire à une bonne dispersion de la phase catalytique A, la poudre préparée par atomisation est remise en suspension aqueuse avec éventuellement un complément d'un précurseur du composé de métal B, éventuellement un liant organique ou minéral, éventuellement un acide organique ou minéral tel que par exemple de l'acide nitrique, de l'acide acétique ou de l'acide formique. Les teneurs en composés de métal B seront comprises entre 0 et 10% poids, de préférence entre 0 et 5% poids par rapport à la quantité de matière sèche.

L'ajout de liant, minéral (tels qu'une alumine de type boehmite ou pseudo-boehmite) ou organique (gommes arabiques, composés cellulosiques ou acryliques ..) permet en général d'améliorer l'accrochage de la couche poreuse "wash coat" sur les supports métalliques ou céramiques. Il est ajouté à la suspension avec des teneurs massiques variant entre 0 et 10% poids et de préférence entre 0,1 et 5% par rapport à la masse de la suspension d'enduction.

L'ajout d'acide organique (par exemple formique ou acétique) ou minéral (par exemple nitrique) permet en général de rendre la suspension plus fluide. La concentration massique en acide exprimée par rapport à la masse de suspension est en général comprise entre 0 et 5%, et de préférence entre 0,1 et 2%

Le support est ensuite mis en contact avec la suspension. L'excédent de suspension peut, par exemple, être éliminé par égouttage puis par soufflage. Le support enduit est généralement séché puis calciné pour fixer la couche poreuse de grande surface spécifique sur ce support. Cette étape d'enduction-calcination peut être répétée plusieurs fois pour déposer une quantité suffisante de matière.

Dans le cas de la mise en oeuvre de supports métalliques (fibres ou feuillards) renfermant de l'aluminium (de type Fecralloy ou de type aluminié), un prétraitement en atmosphère oxydante, destiné à développer en surface du métal une micro-couche d'alumine protectrice, est généralement réalisé entre 700 et 1100°C et de préférence entre 750 et 1000°C.

La température de calcination du support enduit est comprise entre 100 et 800°C et de préférence entre 200 et 700°C.

La masse de "wash coat" (couche poreuse) déposée sur les supports est généralement comprise entre 20 et 200g par litre de support et de préférence entre 50 et 150g par litre.

Si la totalité de la phase catalytiquement active n'a pas été introduite lors des étapes précédentes, une imprégnation du monolithe enduit est réalisée en une ou plusieurs fois avec des solutions renfermant des composés précurseurs des métaux A. Un traitement thermique final destiné à activer le catalyseur est généralement réalisé sous atmosphère neutre (azote), réductrice (hydrogène dilué ou gaz de combustion incomplète d'un carburant liquide ou gazeux) ou oxydante (air ou air dilué dans de l'azote).

La teneur en phase catalytiquement active (métal A), généralement constituée de métaux précieux tels le platine, le palladium, le rhodium, le ruthenium, l'iridium, le ruthénium, l'or et l'argent et éventuellement par des métaux de transition tels que le rhénium, le cuivre, le cobalt et le nickel, le chrome, le molybdène, le manganèse ou le mélange de plusieurs de ces métaux est généralement comprise entre 0,05 et 10g par litre de catalyseur, de préférence entre 0,1 et 5g par litre et d'une façon privilégiée entre 0,5 et 2g par litre de support.

Le traitement thermique final est en général conduit à une température comprise entre 200 et 900°C et de préférence entre 300 et 700°C.

Les exemples suivants illustrent l'invention. Les exemples 2 à 5 et l'exemple 7 décrivent la préparation de catalyseurs selon l'art antérieur. Ils sont testés à titre de comparaison dans les exemples 16 et 17.

### Exemple 1

On verse dans 3900ml d'eau permutée l'équivalent de 126g d'oxyde de cérium (CeO₂) sous forme de nitrate de cérium cristallisé (Ce(NO₃)₃,6H₂0), l'équivalent de 42g d'oxyde de fer (Fe₂O₃) sous forme de nitrate de fer (Fe(NO₃)₂,9H₂0). Après dissolution de ces sels, l'équivalent de 1932g d'alumine de type gamma en poudre sont introduits dans la solution.

Cette suspension, agitée à température ambiante pendant 2h, broyée à l'état humide, de telle manière que le diamètre moyen des particules soit égal à environ 8 microns, est ensuite atomisée par injection dans un système qui permet de la disperser dans un courant d'air chaud à 250°C, la température du mélange air humide-poudre à la sortie de l'atomiseur étant de 150°C.

Après calcination à 550°C pendant 2 heures, 1750 g de cette poudre sont mélangés avec 300g d'alumine liante (pseudo-boehmite) de granulométrie moyenne inférieure à 6 microns, puis remis en suspension aqueuse en présence de 41g d'acide nitrique de telle manière que la teneur en matière sèche de cette nouvelle suspension soit égale à 35% poids.

Un monolithe céramique à 62 cellules par cm² (62 cel./cm²) est immergé dans cette suspension, secoué puis soufflé pour éliminer l'excédent de suspension et enfin calciné 2 heures à 600°C. Cette étape d'enduction est répétée une seconde fois. La masse de la couche poreuse ("wash coat") déposée est de 104g/litre de support.

Le monolithe enduit est ensuite imprégné par une quantité de solution de métaux précieux correspondant à 1,5 fois le volume poreux du "wash coat "et renfermant les sels de platine (H₂PtCl₆) et de rhodium (RhCl₃) de telle manière que la teneur en métaux précieux sur le catalyseur soit de 1,4g par litre de support, avec un rapport massique platine/rhodium égal à 5. Ce monolithe enduit et imprégné est séché 2 heures à 150°C puis activé à 500°C pendant 2 heures sous air.

### Exemple 2 (comparatif)

On prépare un mélange de poudre renfermant les oxydes d'aluminium, de fer et de cérium en quantités équivalentes à 2254g d'alumine de type gamma, 147g d'oxyde de cérium (CeO₂), 49g d'oxyde de fer (Fe₂O₃) et l'équivalent de 420g d'alumine liante (pseudo-boehmite). Ce mélange est versé dans un récipient renfermant de l'eau acidifiée par de l'acide nitrique de telle manière que la teneur en matière sèche de la suspension soit de 35% poids et que le rapport massique acide/matière sèche soit de 2%. Cette suspension est broyée de telle manière que la granulométrie moyenne des particules soit comprise entre 6 et 8 microns.
Les étapes d'enduction de la suspension et d'imprégnation des métaux précieux sont identiques à celles de l'exemple 1.

### Exemple 3 (comparatif)

On prépare un mélange de poudre renfermant les oxydes d'aluminium en quantités équivalentes à 2254g d'alumine charge de type gamma et 420g d'alumine liante de type pseudo-boehmite. Ce mélange est versé dans un récipient renfermant de l'eau acidifiée par de l'acide nitrique de telle manière que la teneur en matière sèche de la suspension soit de 35%poids et que le rapport massique acide/matière sèche soit de 2%. Cette suspension est broyée de telle manière que la granulométrie moyenne des particules soit comprise entre 6 et 8 microns.

L'étape d'enduction est réalisée comme dans l'exemple 1 à l'exception que la teneur en" wash coat", après calcination à 600°C, est limitée à 96,9g par litre de support.

L'addition du cérium et du fer est réalisée par imprégnation du monolithe enduit par une solution des nitrates de fer et de cérium renfermant l'équivalent de 5,3g d'oxyde de cérium (CeO₂) et de 1,8g d'oxyde de fer (Fe₂O₃).

Après séchage et calcination, le monolithe est imprégné, comme dans l'exemple 1, par une solution chlorhydrique d'acide chloroplatinique et de chlorure de rhodium de telle manière que la teneur en métaux précieux soit de 1,4g par litre de support, au rapport massique platine/rhodium égal à 5. Le traitement thermique final est identique à celui de l'exemple 1.

### Exemple 4 (comparatif)

L'équivalent de 2500 g de billes d'alumine de type gamma sont imprégnées à sec par 2800 cm3 d'une solution aqueuse des nitrates de fer et de cérium renfermant l'équivalent de 54,5 g d'oxyde de fer (Fe₂O₃) et 163g d'oxyde de cérium (CeO₂). Après séchage et calcination 4 heures à 600°C, les billes sont broyées à sec pour obtenir une poudre de granulométrie moyenne inférieure à 30 microns.

On mélange 1750g de cette poudre à 300g d'équivalent alumine (Al₂O₃) de type pseudo-boehmite, puis on verse le tout dans de l'eau acidifiée par HNO₃ de telle manière que la teneur en matière sèche soit de 35% poids et que le rapport massique acide/matière sèche soit de 2%.

Après broyage humide de la suspension pour abaisser la taille des particules à environ 6 à 8 microns, un monolithe céramique est enduit au moyen de cette suspension, puis imprégné de métaux précieux selon les conditions décrites dans l'exemple 1.

### Exemple 5 (comparatif)

Une charge d'alumine dopée est préparée par imprégnation de 3000g de billes d'alumine gamma par 8 litres d'une solution aqueuse de nitrate ferrique, de nitrate céreux et de nitrate de zirconyle, contenant l'équivalent de 300g de fer, 700g de cérium et 700g de zirconium. Après un temps de contact de 30 minutes, les billes sont séchées, calcinées à 700°C puis broyées de manière que le diamètre moyen des particules soit de 7 microns.

Une suspension est préparée à partir de 2700g de cette charge en poudre, de 300g d'alumine liante et de 6 l d'eau.

Un support métallique de 1,2 litre de volume enduit par cette suspension à pH = 3,5 est imprégné, après calcination à 500°C, par une solution renfermant du nitrate de palladium et du chlorure de rhodium de manière à déposer sur ce support l'équivalent de 3g de palladium et 0,3g de rhodium.

Le catalyseur ainsi préparé et calciné à 500°C contient, en poids par rapport au catalyseur fini, l'équivalent de 0,2% de palladium, 0,02% de rhodium, 1,5% de fer, 3,5% de cérium et 3,5% de zirconium.

### Exemple 6

Selon la technique décrite dans l'exemple 1, on atomise une suspension aqueuse renfermant l'équivalent de 3000g de la même alumine que celle mise en oeuvre dans l'exemple 5, mais broyée à une granulométrie moyenne de 7 microns, et d'une solution nitrique renfermant comme ci-dessus l'équivalent de 300 g de fer, de 700 g de cérium et de 700 g de zirconium.

Une nouvelle suspension est préparée à partir de 2700 g de poudre provenant de l'atomisation et recalcinée à 550°C, de 300g d'alumine liante et de 7 l d'eau, le pH étant ajusté à 3,5.

Les conditions d'enduction et d'imprégnation d'un support métallique de 1,2 l sont identiques à celles décrites dans l'exemple 5.

### Exemple 7 (comparatif)

Un support céramique est enduit par une suspension d'alumine gamma stabilisée par des ions calcium, puis séché et calciné à 900°C. Ce monolithe enduit par 180 g de "wash coat" est ensuite imprégné par une solution d'acétate de cérium, de nitrate de fer et d'acétate de zirconium, puis séché et calciné à 700°C.

Ce support enduit est alors imprégné par une solution de nitrate de platine, de nitrate de rhodium et de nitrate d'aluminium de telle manière que la quantité de métaux précieux introduite soit de 2,16 g au rapport Pt/Rh=5, et celle d'aluminium de 1,08 g. La teneur en chacun des oxydes de fer, cérium et zirconium est de 6,6% par rapport à la masse de l'alumine enduite sur le support.

### Exemple 8

On atomise, selon les conditions de l'exemple 1, une suspension renfermant l'alumine mise en oeuvre dans l'exemple 7 et une solution de nitrate de fer, d'acétate de cérium et d'acétate de zirconium de telle manière que la teneur en chacun de ces oxydes soit de 6,6% poids par rapport à la masse d'alumine engagée.

Un support céramique est enduit avec une suspension préparée à partir de la poudre atomisée puis est imprégné avec une solution de sels de platine, de rhodium et d'aluminium, selon les mêmes conditions opératoires et avec les mêmes quantités que celles mises en oeuvre dans l'exemple 7.

### Exemple 9

Dans 3900g d'eau, sont ajoutés 1900g d'alumine de type gamma préalablement imprégnée par 1% poids de palladium, et les équivalents, sous forme de solutions de nitrates, de 680 g d'oxyde de cérium (CeO₂), de 130 g d'oxyde de fer (Fe₂O₃), de 50 g d'oxyde de lanthane (La₂O₃). Cette suspension, après broyage humide pour abaisser la taille moyenne des particules à environ 7 microns, est mûrie sous agitation pendant cinquante heures à 35°C, puis atomisée à haute tempèrature ("spray calcination"). La température d'entrée du gaz chaud est d'environ 750°C et le débit de l'injection de la suspension est ajusté de telle manière que la température de sortie des gaz soit comprise entre 400 et 500°C.

On prépare une nouvelle suspension en versant dans 4 litres d'eau acidifiée par 60 g d'acide acétique, 2000 g de la poudre préparée ci-dessus et 10 g de gomme arabique (liant organique).

Les étapes d'enduction de la suspension et d'imprégnation du monolithe céramique enduit sont identiques à celles de l'exemple 1, à l'exception que les teneurs en platine et rhodium imprégnés sont respectivement de 0,55% et 0,15% poids par rapport aux 100 g de "wash coat" déposé.

### Exemple 10

Une suspension aqueuse (6 l) renfermant 1900 g d'alumine de type gamma préalablement imprégnée par l'équivalent de 1% poids de silice, 50 g de carbonate de baryum, 400 g d'oxyde de cérium (CeO₂) (solution de nitrate céreux) et 50 g d'oxyde de fer (Fe₂O₃) (solution de nitrate férrique), est mûrie sous agitation pendant 5 heures à température ambiante, puis broyée pour abaisser la taille moyenne des particules à une dizaine de microns.

Cette suspension est séchée par atomisation dans un courant d'air chaud dont la température initiale est de 350°C, et la température en sortie de séchage d'environ 250°C.

Un nouveau mélange de poudre renfermant 2000 g de produit atomisé et l'équivalent de 500 g d'alumine de type pseudo-boehmite est dispersé dans 7 litres d'eau acidifée par 100 g d'acide formique.

Un monolithe métallique, constitué par un co-enroulement de 2 feuillards de 50 microns d'épaisseur en acier de type Fecralloy, l'un plat et l'autre ondulé, brasé et maintenu rigide dans une virole en acier de 1,5mm d'épaisseur, est enduit par cette suspension selon la technique décrite dans l'exemple 1. Cette opération est répétée 3 fois pour que la masse de la couche poreuse "wash coat" de ce monolithe à 46 cellules par cm² soit de 165 g par litre de support.

Ce monolithe enduit et calciné à 600°C est imprégné par une solution de nitrate de palladium et de nitrate de rhodium de telle manière que la teneur en métaux précieux soit de 2,1g par litre de support avec un rapport massique palladium/rhodium de 10.

Après séchage et calcination 2 heures à 500°C, on soumet le catalyseur à un traitement réducteur en remplaçant l'air par de l'azote et, lorsque tout l'oxygène a été éliminé, en injectant dans cet azote l'équivalent de 1% volume d'hydrogène. Ce traitement réducteur est réalisé pendant 30 minutes à 500°C avant redescente sous azote à température ambiante et remise à l'air.

### Exemple 11

Selon la technique de l'exemple 1, une suspension renfermant l'équivalent de 2500 g d'alumine gamma, 600 g d'équivalent oxyde de cérium (solution de nitrate) et 20 g d'équivalent oxyde de fer (également solution de nitrate), est broyée puis mûrie 16 heures à 20°C. Elle est ensuite atomisée entre 300°C (température d'entrée de gaz) et 110°C (température de sortie), la poudre étant ensuite recalcinée à 500°C pendant 4 heures.

Une nouvelle suspension est préparée en ajoutant dans l'eau acidifiée par l'acide acétique (1% poids) la poudre atomisée renfermant le cérium et le fer.

Un support métallique à structure empilée (préparé par superposition de feuillards ondulés en acier de type Fecralloy) et à canaux droits (46 cellules/cm²) est enduit par cette suspension. Le monolithe enduit, séché et calciné à 600°C, est ensuite imprégné par une solution de nitrate de palladium à raison de 1,2g par litre de support, puis séché et calciné à 500°C.

### Exemple 12

La préparation est identique à celle de l'exemple 11, excepté que la suspension atomisée renferme en plus de l'alumine et des solutions de nitrate de fer et de cérium, de l'oxyde de titane (TiO₂) dans un rapport massique Al₂O₃/TiO₂=5, et que, dans l'imprégnation des métaux précieux, le palladium a été remplacé par le platine avec une teneur de 0,5g par litre de support.

### Exemple 13

Dans une suspension aqueuse contenant 1200 g d'alumine de type gamma, 600g d'alumine de type alpha, on verse une solution nitrique renfermant les équivalents de 80 g d'oxyde de cérium, 40 g d'oxyde de fer, 200 g d'oxyde d'aluminium et 50 g d'oxyde de lanthane.

Cette suspension broyée, mûrie pendant 50 heures à température ambiante est atomisée avec un air dont la température est de 850°C en entrée et d'environ 500-550°C en sortie d'atomiseur.

La poudre recueillie est remise en suspension acétique (pH=5.1) avec une alumine liante (rapport massique poudre atomisée/alumine liante égal à 85/15) puis enduite sur un support métallique à structure fibrillaire (enchevêtrement de fibres d'environ 50 microns d'épaisseur et de 0,1-0,2mm de largeur) en acier de type Fecralloy.

Le monolithe enduit (90 g de "wash coat" par litre de support) séché et calciné à 600°C est ensuite imprégné par une solution de platine dinitrosotétramine de telle manière que la teneur en métal précieux soit de 2,2g par litre de support, et finalement, séché et calciné à 500°C.

### Exemple 14

On prépare une suspension aqueuse, acidifiée par 1% poids d'acide citrique, par dissolution de nitrate de fer, de nitrate de cérium et ajout d'alumine de type gamma. Elle renferme, en matières sèches, les équivalents de 90% d'alumine, 7,5% d'oxyde de cérium et 2,5% poids d'oxyde de fer.

Après un temps de mûrissement de 4 heures à température ambiante et sous agitation, cette suspension est atomisée entre 600 et 350°C.

La poudre recueillie est remélangée avec 10% poids d'alumine liante puis remise en suspension dans de l'eau acidifiée par de l'acide acétique (2% poids par rapport à la matière sèche).

Un support métallique, constitué par la superposition de feuillards en acier aluminié (acier recouvert par une fine couche d'aluminium) de 50 microns d'épaisseur et présentant une structure ondulée avec des canaux en zig zag (non rectiligne), est enduit en 3 étapes pour déposer l'équivalent de 115 g de "wash coat" par litre de support.

Après séchage et calcination à 600°C pendant 4 heures, le monolithe enduit est imprégné par une solution de nitrate de palladium et de platine dinitroso-tétramine de telle manière que la teneur en métaux précieux soit de 1,1g par litre avec un rapport massique palladium/platine de 2. Le traitement thermique final est réalisé, comme dans l'exemple 6, en milieu réducteur.

### Exemple 15

On reproduit le catalyseur préparé dans l'exemple 9 à l'exception que l'alumine de type gamma est préimprégnée par l'équivalent de 0,5% poids d'or et 1% poids de molybdène, à la place des 1% poids de palladium, et que l'ajout d'oxyde de lanthane dans la suspension à atomiser est supprimé.

Les conditions opératoires des étapes d'atomisation, d'enduction et d'imprégnation des métaux précieux sont également identiques à celles décrites dans l'exemple 9.

### Exemple 16

Chacun des 6 catalyseurs préparés comme décrits dans les exemples 1 à 6 est monté sur un banc moteur équipé d'un moteur de 2 litres de cylindrée dont l'alimentation en carburant est assurée par une injection multi-points pilotée par une sonde de régulation de richesse (sonde lambda). Les catalyseurs sont installés sur la ligne d'échappement pourvue d'un échangeur thermique qui permet de réguler la température des gaz d'échappement entre 150 et 600°C. Au préalable le catalyseur est conditionné à richesse 1 pendant 10 heures à 700°C.

Les tests catalytiques sont réalisés à régime moteur constant, en fonctionnant à une richesse moyenne de 1 mais avec des variations d'amplitudes de richesse de +/- 0,05 avec une fréquence des pulsations de 1 Hertz. La température des gaz à l'entrée du catalyseur est augmentée de 10 en 10°C, entre 250 et 550°C.

L'analyse des gaz en entrée et en sortie du catalyseur est réalisée en continu par infra rouge pour le monoxyde de carbone, par chimiluminescence pour les oxydes d'azote et par ionisation de flamme pour les hydrocarbures.

L'efficacité du catalyseur pour un polluant est mesurée par le rapport entre l'intégrale de la courbe représentant la conversion de ce polluant en fonction de la température entre 300 et 550°C et l'intégrale qui résulterait d'une conversion totale dans le domaine de température donné. Elle est exprimée en pourcent.

Les valeurs des efficacités, pour chacun des principaux polluants d'un gaz d'échappement, sont rassemblées dans le tableau 1 ci-dessous pour les catalyseurs préparés selon les conditions opératoires décrites dans les exemples 1 à 6.

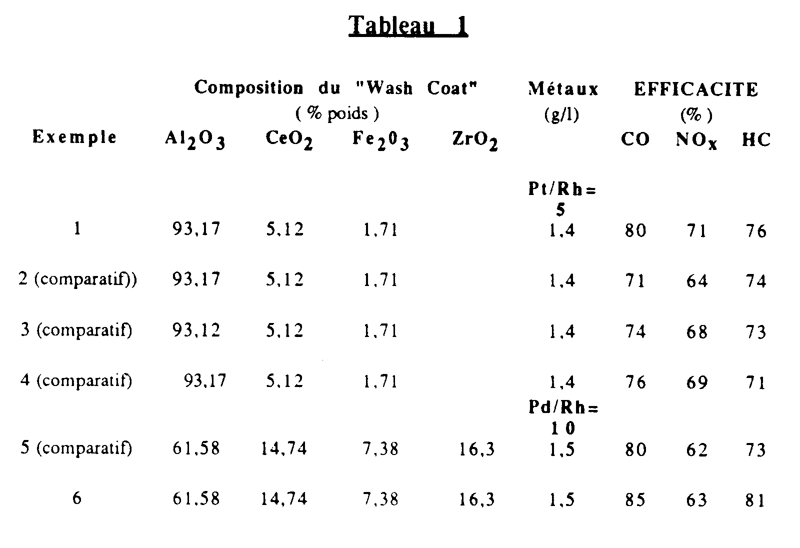

Les catalyseurs préparés selon l'invention et décrits dans les exemples (1) et (6) présentent des performances, exprimées ici par leur efficacité, supérieures de plusieurs points à celles des catalyseurs des exemples (2), (3) et (4) d'une part, et (5) d'autre part, préparés selon l'art antérieur .

### Exemple 17

Les catalyseurs des exemples 7 à 10 subissent, sur un banc moteur équipé d'un carburateur, un vieillissement accéléré en milieu oxydant d'une durée 200 heures, simulant ainsi approximativement le vieillissement réel de catalyseurs qui auraient équipé un véhicule ayant parcouru 80000km. La richesse (R) moyenne du mélange air-carburant est de l'ordre de R=0,95 et le cycle de vieillissement correspond à un régime de fonctionnement d'un véhicule roulant à 150km/h pendant 1 minute puis à un ralentissement brutal à 50km/h avec pour ce régime une injection d'air pendant 20 secondes. Les températures maximales atteintes sont de l'ordre de 900°C.

Les catalyseurs sont ensuite testés selon les conditions opératoires décrites dans l'exemple 16. Les compositions pondérales des catalyseurs et leurs efficacités vis à vis des principaux polluants sont données dans le Tableau 2 ci-après.

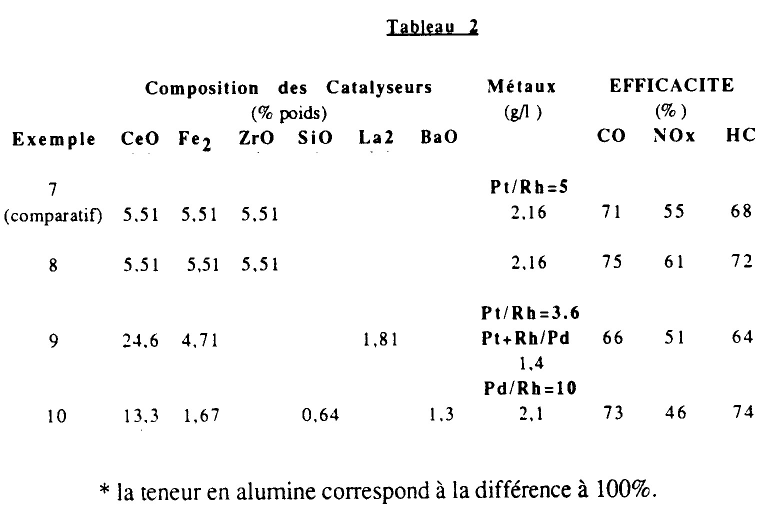

L'efficacité du catalyseur de l'exemple (8) préparé selon l'invention et testé après un vieillissement sévère de 200 heures est supérieure à celle de celui de l'exemple (7) préparé selon l'art antérieur.
Les résultats des catalyseurs des exemples (9) et (10) illustrent l'invention mais ne peuvent être comparés aux précédents, leur formulation étant différente.

### Exemple 18

Les catalyseurs préparés comme décrit dans les exemples 11 et 12 ont été testés en laboratoire, avec des mélanges gazeux représentatifs d'une composition de gaz d'échappement d'un moteur à mélange pauvre d'une part et d'un moteur diesel de petite cylindrée d'autre part. Aux mélanges gazeux dont la composition volumique est définie dans le tableau 3, 20 ppm de dioxyde de soufre sont rajoutés.

L'activité catalytique est caractérisée par la détermination de la valeur de la température d'amorçage de la réaction d'oxydation (température de "light off": TLO), c'est à dire la température pour laquelle 50% d'un polluant sont convertis. Dans le tableau 4 la température d'amorçage des oxydes d'azote n'est pas mentionnée car leur taux de conversion est pratiquement inexistant.

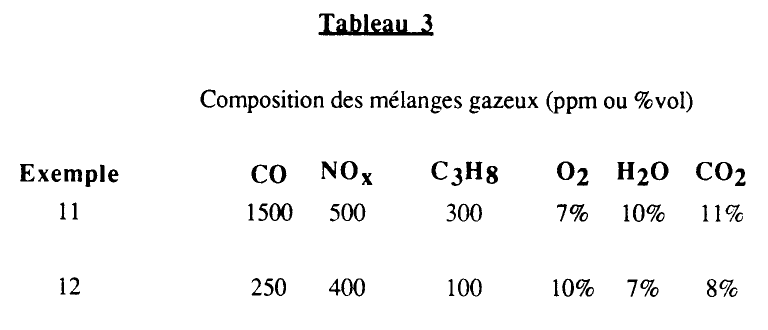

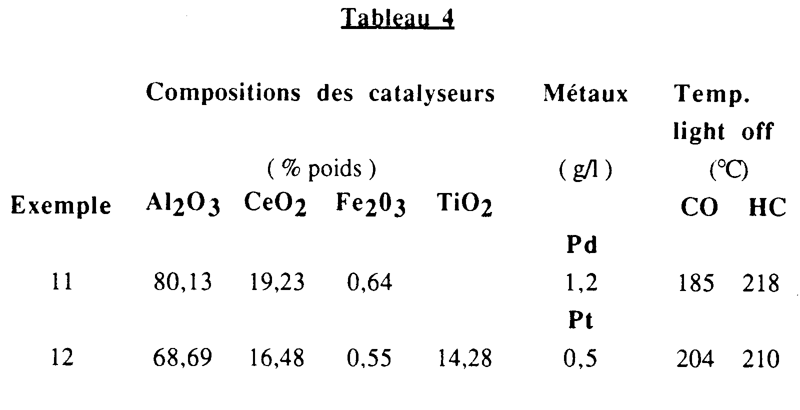

### Exemple 19

Les catalyseurs préparés comme décrits dans les exemples 13 et 14 sont testés en mini-tests catalytiques avec des compositions de gaz simulant les émissions de deux types de moteurs 2 temps dont les compositions volumiques sont reportées dans le tableau 5. Avant test, ces catalyseurs ont été vieillis artificiellement par traitement thermique à 950°C pendant 16 heures sous azote additionné de 1% d'oxygène et de 10% d'eau.

La mesure d'activité à été réalisée, comme dans l'exemple 16, par calcul des efficacités du catalyseur pour le monoxyde de carbone et pour les hydrocarbures, entre 200 et 500°C, efficacités dont les valeurs sont reportées dans le tableau 6.

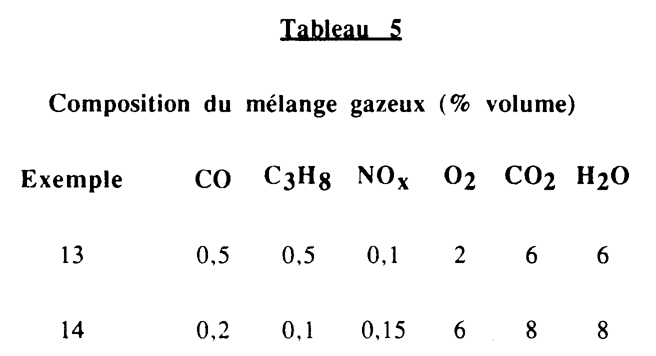

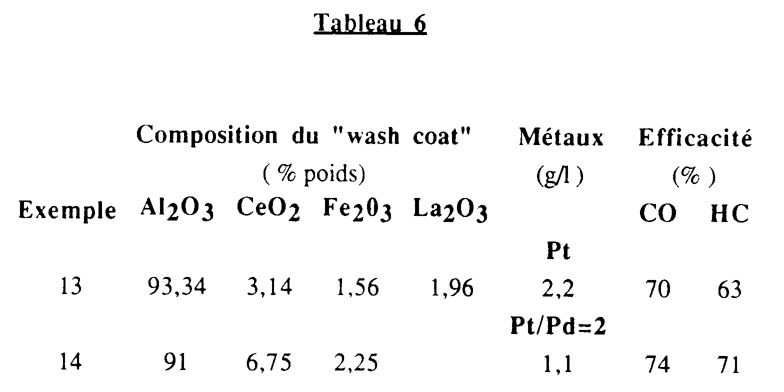

## Revendications

1. Procédé de fabrication d'un catalyseur renfermant au moins un oxyde inorganique réfractaire, au moins un oxyde de fer et au moins un oxyde de cérium, au moins un métal A choisi dans les groupes VIB, VIIB, VIII et IB de la Classification Périodique et consistant plus spécifiquement en au moins un élément choisi parmi le platine, le rhodium, le palladium, l'iridium, le ruthénium, le rhénium, l'or, l'argent, le cuivre, le nickel, le cobalt, le manganèse, le chrome et le molybdène, et éventuellement au moins un composé de métal B appartenant au groupe IA ou IIA, au groupe des terres rares de numéros atomiques de 57 à 71 compris, ou au groupe IVB de la Classification Périodique, et consistant plus spécifiquement en au moins un élément choisi parmi le rubidium, le calcium, le strontium, le baryum, le lanthane, le praséodyme, le néodyme, le zirconium et le titane, déposés sous forme d'une couche poreuse sur un support céramique ou métallique, ledit procédé étant caractérisé en ce qu'il comprend :
- une étape (a), dans laquelle on atomise dans un appareillage d'atomisation une suspension aqueuse d'au moins une poudre dudit oxyde inorganique réfractaire, contenant au moins un sel soluble de cérium, au moins un sel soluble de fer, éventuellement au moins une partie d'au moins un composé insoluble et/ou d'au moins un sel soluble dudit métal B, éventuellement au moins une partie d'au moins un métal A préalablement déposé par imprégnation d'au moins un de ses précurseurs sur au moins un des constituants solides présents, de manière qu'on recueille une poudre que l'on calcine éventuellement ;
ledit procédé comprenant en outre :
- une étape (b) dans laquelle on remet en suspension ladite poudre, tout en ajoutant le reste éventuel ou la totalité dudit composé de métal B, ainsi que, éventuellement au moins un agent liant et éventuellement au moins un acide minéral ou organique ;
- une étape (c), dans laquelle on enduit un support céramique ou métallique au moyen de la suspension obtenue dans l'étape (b) ;
- une étape (d), dans laquelle on calcine ledit support enduit ;
- une étape (e), dans laquelle on imprègne ledit support enduit et calciné par le reste éventuel ou la totalité dudit précurseur de métal A ; et
- une étape (f) dans laquelle on active thermiquement ledit support enduit, calciné et imprégné issu de l'étape (e).

2. Procédé selon la revendication 1, caractérisé en ce que l'étape (a) comprend,
- une étape (i) dans laquelle on broie, à sec ou à l'état humide, un ensemble de constituants solides comprenant ledit oxyde inorganique réfractaire et éventuellement ledit composé insoluble de métal B, de manière à obtenir une poudre de granulométrie moyenne réduite;
- une étape (ii) dans laquelle on prépare une suspension aqueuse desdits constituants solides broyés, avec addition d'au moins un sel soluble de fer et d'au moins un sel soluble de cérium, éventuellement d'au moins un composé insoluble ou soluble de métal B, éventuellement d'au moins un métal A préimprégné sur au moins un desdits constituants solides broyés, et éventuellement d'au moins un acide minéral ou organique ;
- une étape (iii) dans laquelle on laisse mûrir la suspension ainsi formée ;
- une étape (iv) dans laquelle on atomise ladite suspension dans un appareillage d'atomisation et l'on recueille une poudre ; et éventuellement
- une étape (v) dans laquelle on calcine la poudre ainsi recueillie.

3. Procédé selon la revendication 2, caractérisé en ce que la granulométrie moyenne de la poudre recueillie à l'issue de l'étape (i) est comprise entre 0,1 et 100 microns, de préférence entre 1 et 20 microns.

4. Procédé selon la revendications 2 ou 3, caractérisé en ce que la teneur potentielle en matière sèche de la suspension à atomiser est comprise entre 5 et 60% poids et de préférence entre 10 et 50% poids.

5. Procédé selon l'une des revendications 2 à 4, caractérisé en ce que, dans l'étape (iii), le temps de mûrissement de la suspension à atomiser est compris entre 0,5 et 100 heures, de préférence entre 2 et 50 heures.

6. Procédé selon l'une des revendications 2 à 5, caractérisé en ce que, dans l'étape (iii), la température de mûrissement est comprise entre 0 et 50°C, de préférence entre 10 et 40°C.

7. Procédé selon l'une des revendications 1 à 6, caractérisé en ce que ledit oxyde inorganique réfractaire est choisi dans le groupe formé par l'alumine alpha, l'alumine gamma, l'alumine delta, l'alumine éta, l'alumine théta, l'alumine kappa, l'alumine rô, l'alumine khi, la silice, les silices-alumines, les zéolithes, les silices-magnésies, l'oxyde de titane, l'oxyde de zirconium et leurs mélanges.

8. Procédé selon l'une des revendications 1 à 7, caractérisé en ce que la teneur en oxyde de cérium de la poudre récupérée après atomisation est comprise entre 0,1 et 40%, de préférence entre 0,2 et 15% et d'une façon privilégiée entre 0,5 et 6% poids, déterminée après calcination à 1000°C.

9. Procédé selon l'une des revendications 1 à 8, caractérisé en ce que la teneur en oxyde de fer de la poudre récupérée aprés atomisation est comprise entre 0,1 et 10%, de préférence entre 0,15 et 5% et d'une façon privilégiée entre 0,2 et 2% poids, déterminée après calcination à 1000°C.

10. Procédé selon l'une des revendications 1 à 9, caractérisé en ce que la teneur en composé de métal B de la poudre récupérée aprés atomisation, est comprise entre 0 et 10% et de préférence entre 0 et 5% poids, déterminée après calcination à 1000°C.

11. Procédé selon l'une des revendications 2 à 10, caractérisé en ce que la quantité d'acide minéral ou organique ajouté à la suspension aqueuse dans l'étape (ii) est comprise entre 0 et 5% et de préférence entre 0,5 et 3% en poids de la suspension.

12. Procédé selon l'une des revendications 1 à 11, caractérisé en ce que, dans l'étape (a) ou (iv), la température du gaz chaud en entrée de l'appareillage d'atomisation est comprise entre 100 et 900°C, de préférence entre 150 et 800°C et d'une manière préférée entre 200 et 700°C.

13. Procédé selon l'une des revendications 1 à 12, caractérisé en ce que, dans l'étape (a) ou (iv), la température du gaz mesurée en sortie de l'appareillage d'atomisation est comprise entre 100 et 600°C, de préférence entre 150 et 500°C.

14. Procédé selon l'une des revendications 1 à 13, caractérisé en ce que la température de calcination de la poudre issue de l'appareillage d'atomisation, à l'étape (a) ou (v), est comprise entre 150 et 900°C et de préférence entre 300 et 700°C.

15. Procédé selon l'une des revendications 1 à 14, caractérisé en ce que ledit support métallique est en acier de type Fecralloy ou de type aluminié.

16. Procédé selon l'une des revendications 1 à 15, caractérisé en ce que ledit support métallique est traité, avant l'étape (c) d'enduction, sous atmosphère oxydante entre 700 et 1100°C et de préférence entre 750 et 1000°C.

17. Procédé selon l'une des revendications 1 à 16, caractérisé en ce que la quantité de liant minéral ou organique ajouté à la suspension aqueuse dans l'étape (b), représente 0 à 10% et de préférence 0,1 à 5% poids de ladite suspension.

18. Procédé selon l'une des revendications 1 à 17, caractérisé en ce que la quantité d'acide minéral ou organique ajoutée à la suspension aqueuse dans l'étape (b), représente 0 à 5% poids et de préférence 0,1 à 2% poids de ladite suspension.

19. Procédé selon l'une des revendications 1 à 18, caractérisé en ce que, dans l'étape (c), on enduit le support avec ladite suspension, puis on élimine l'excédent de suspension présent dans les canaux du support, et on calcine le support enduit dans l'étape (d) à une température comprise entre 100 et 800°C et de préférence entre 200 et 700°C.

20. Procédé selon l'une des revendications 1 à 19, caractérisé en ce que la masse de la couche poreuse déposée est comprise entre 20 et 200g et de préférence entre 50 et 150g par litre de support.

21. Procédé selon l'une des revendications 1 à 20, caractérisé en ce que, dans l'étape (e), le support enduit est imprégné par le reste ou la totalité des précurseurs de métal A avec une teneur globale comprise entre 0,05 et 10g , de préférence entre 0,1 et 5g, et d'une manière préférée entre 0,5 et 2g par litre de support.

22. Procédé selon l'une des revendications 1 à 21, caractérisé en ce que, dans l'étape (f), le traitement thermique en atmosphère neutre, oxydante ou réductrice est réalisé à une température comprise entre 200 et 900°C, de préférence entre 300 et 700°C.

## Claims

1. A process for producing a catalyst that contains at least one refractory inorganic oxide, at least one iron oxide, and at least one cerium oxide, at least one metal A selected from groups VIB, VIIB, VIII and IB of the Periodic Table of the Elements and consisting more specifically of at least one element selected from platinum, rhodium, palladium, iridium, ruthenium, rhenium, gold, silver, copper, nickel, cobalt, manganese, chromium and molybdenum, and optionally at least one compound of metal E, belonging to group IA or IIA, group of the rare earth metals of atomic number from 57 to 71 inclusive, or group IVB of the Periodic Table of the Elements and consisting more specifically in at least one element selected from rubidium, calcium, barium, lanthanum, praseodymium, neodymium, zirconium and titanium, deposited in the form of a porous layer on a ceramic or metal substrate, said process being characterized by the fact that it includes :
- a step (a) in which, in an atomizing device, there is atomized an aqueous suspension of at least one powder of said refractory inorganic oxide containing at least one soluble cerium salt, at least one soluble iron salt, optionally at least one portion of at least one insoluble compound and/or at least one soluble salt of said metal B, and optionally at least one portion of at least one metal A that is previously deposited by impregnation of at least one of its precursors on at least one of the solid constituents that are present, in such a way that a powder is recovered which is optionally calcined ;
said process further comprising :
- a step (b) in which said powder is put back into suspension by adding any remainder or all of said compound of metal B, as well as, optionally at least one bonding agent and optionally at least one mineral acid or organic acid ;
- a step (c) in which a ceramic or metal substrate is coated with the suspension obtained in step (b) ;
- a step (d) in which said coated substrate is calcined ;
- a step (e) in which said coated and calcined substrate is impregnated with any remainder or all of said precursor of metal A ; and
- a step (f) in which said coated, calcined, and impregnated substrate obtained from step (e) is heat-actived.

2. Process according to claim 1, characterized in that step (a) includes :
- a step (i) in which a collection of solid constituents that comprises said refractory inorganic oxide and optionally said insoluble compound of metal B is ground dry or wet, in such a way as to obtain a powder of reduced mean grain size ;
- a step (ii) in which an aqueous suspension of said ground solid constituents is prepared with the addition of at least one soluble iron salt and at least one soluble cerium salt, optionally at least one insoluble or soluble compound of metal B, optionally of at least one metal A that is preimpregnated on at least one of said ground solid constituents and, optionally, at least one mineral acid or inorganic acid ;
- a step (iii) in which the suspension thus formed is allowed to cure ;
- a step (iv) in which said suspension is atomized in an atomization device and a powder is recovered ; and optionally ;
- a step (v) in which the powder thus recovered is calcined.

3. Process according to claim 2, characterized in that the mean grain size of the powder recovered from step (i) is between 0.1 and 100 microns, preferably between 1 and 20 microns.

4. Process according to claim 2 or 3, characterized in that the potential dry-material content of the suspension to be atomized is between 5 and 60 % by weight, and preferably between 10 and 50 % by weight.

5. Process according to one of claims 2 to 4, characterized in that in step (iii) the curing time of the suspension to be atomized is between 0.5 and 100 hours, preferably between 2 and 50 hours.

6. Process according to one of claims 2 to 5, characterized in that in step (iii) the curing temperature is between 0 and 50 °C, preferably between 10 and 40 °C.

7. Process according to one of claims 1 to 6, characterized in that said refractory inorganic oxide is selected from the group consisting of alpha alumina, gamma alumina, delta alumina, eta alumina, theta alumina, kappa alumina, rho alumina, chi alumina, silica, silicas-aluminas, zeolites, silicas-magnesias, titanium oxide, zirconium oxide, and their mixtures.

8. Process according to one of claims 1 to 7, characterized in that the cerium oxide content of the powder recovered after atomization is between 0.1 and 40 %, preferably between 0.2 and 15 %, and most preferably between 0.5 and 6 % by weight, determined after calcination at 1000 °C.

9. Process according to one of claims 1 to 8, characterized in that the iron oxide content of the powder recovered after atomization is between 0.1 and 10 %, preferably between 0.15 and 5 %, and most preferably between 0.2 and 2 % by weight, determined after calcination at 1000 °C.

10. Process according to one of claims 1 to 9, characterized in that the content of the compound of metal B of the powder recovered after atomization is between 0 and 10 %, preferably between 0 and 5 % by weight, determined after calcination at 1000 °C.

11. Process according to one of claims 2 to 10, characterized in that the amount of mineral or organic acid added to the aqueous suspension in step (ii) is between 0 and 5 % and preferably between 0.5 and 3 % by weight of the suspension.

12. Process according to one of claims 1 to 11, characterized in that in step (a) or (iv) the temperature of the hot gas at the intake of the atomizing device is between 100 and 900 °C, preferably between 150 and 800 °C, and most preferably between 200 and 700 °C.

13. Process according to one of claims 1 to 12, characterized in that in step (a) or (iv) the temperature of the gas measured at the outlet of the atomizing device is between 100 °C and 600 °C, an preferably between 150 and 500 °C.

14. Process according to one of claims 1 to 13, characterized in that the calcination temperature of the powder coming from the atomizing device at step (a) or (v) is between 150 and 900 °C, and preferably between 300 and 700 °C.

15. Process according to one of claims 1 to 14, characterized in that said metal substrate is of Fecralloy type steel or aluminized-type steel.

16. Process according to one of claims 1 to 15, characterized in that said metal substrate is treated, before coating step (c), under an oxidizing atmosphere between 700 and 1100 °C, and preferably between 750 and 1000 °C.

17. Process according to one of claims 1 to 16; characterized in that the quantity of mineral or organic binder added to the aqueous suspension in step (b) represents 0 to 10 %, and preferably 0.1 to 5 % by weight of said suspension.

18. Process according to one of claims 1 to 17, characterized in that the quantity of mineral or organic acid added to the aqueous suspension in step (b) represents 0 to 5 % by weight, and preferably 0.1 to 2 % by weight of said suspension.

19. Process according to one of claims 1 to 18, characterized in that in step (c) the substrate is coated with said suspension, then the excess suspension present in the channels of the susbtrate is eliminated, and the substrate coated in step (d) is calcined at a temperature of between 100 and 800 °C, and preferably between 200 and 700 °C.

20. Process according to one of claims 1 to 19, characterized in that the weight of the porous layer deposited is between 20 and 200 g and preferably between 50 and 150 g per liter of substrate.

21. Process according to one of claims 1 to 20, characterized in that in step (e) the coated substrate is impregnated with the remainder or all of the precursors of metal A, with a total content of between 0.05 and 10 g, preferably between 0.1 and 5 g, and most preferably between 0.5 and 2 g per liter of substrate.

22. Process according to one of claims 1 to 21, characterized in that in step (f) the heat treatment in a neutral, oxidizing, or reducing atmosphere is carried out at a temperature of between 200 and 900 °C, preferably between 300 and 700 °C.

## Patentansprüche

1. Verfahren zur Herstellung eines Katalysators, der Wenigstens ein feuerfestes anorganisches Oxid, wenigstens ein Eisenoxid und wenigstens ein Ceroxid, wenigstens ein Metall A, gewählt aus den Gruppen VIB, VIIB, VIII und IB des Periodensystems der Elemente und das spezifischer aus wenigstens einem Element besteht, das gewählt ist aus Platin, Rhodium, Palladium, Iridium, Ruthenium, Rhenium, Gold, Silber, Kupfer, Nickel, Kobalt, Mangan, Chrom und Molybdän und ggf. wenigstens eine Verbindung des Metalls B umfaßt, das zur Gruppe IA oder IIA, zur Gruppe der seltenen Erden mit den Atomzahlen 57 bis 71 einschließlich oder zur Gruppe IVB des Periodensystems der Elemente gehört und spezifische aus Wenigstens einem Element besteht, das gewählt ist aus Rubidium, Kalzium, Strontium, Baryum, Lanthan, Praseodym, Neodym, Zirkon und Titan, abgeschieden in Form einer porösen Schicht auf einem keramischen oder metallischen Träger, wobei dieses Verfahren sich dadurch auszeichnet, daß es umfaßt:
- eine Stufe (a), in der man in einer Zerstäubungsvorrichtung eine wässrige Suspension wenigstens eines Pulvers dieses feuerfesten anorganischen Oxids zerstäubt, daß wenigstens ein lösliches Salz des Cers enthält, Wenigstens ein lösliches Salz des Eisens, ggf. wenigstens einen Teil wenigstens einer unlöslichen Verbindung und/oder wenigstens ein lösliches Salz dieses Metalls B enthält, ggf. wenigstens einen Teil wenigstens eines Metalls A, das vorher durch Imprägnierung wenigstens einer seiner Vorläufer auf wenigstens einem der vorhandenen festen Bestandteile abgeschieden wurde, derart, daß man ein Pulver sammelt, das man ggf. kalziniert, wobei das Verfahren im übrigen umfaßt:
- eine Stufe (b), in der man dieses Pulver wieder in Suspension bringt, indem man den eventuellen Rest oder die Gesamtheit dieser Verbindung des Metalls B sowie ggf. wenigstens ein Bindemittel und ggf. wenigstens eine mineralische oder organische Säure zugibt;
- eine Stufe (c), in der man einen keramischen oder metallischen Träger vermittels der in Stufe (b) erhaltenen Suspension beschichtet;
- eine Stufe (d), in der man diesen beschichteten Träger kalziniert;
- eine Stufe (e), in der man diesen beschichteten und kalzinierten Träger durch den eventuellen Rest oder die Gesamtheit dieses Vorläufers des Metalls A imprägniert; und
- eine Stufe (f), in der man thermisch diesen beschichteten kalzinierten und aus der Stufe (e) kommenden Träger aktiviert.

2. Verfahren nach Anspruch 1, dadurch gekennzeichnet, daß die Stufe (a) umfaßt:
- eine Stufe (i), in der man trocken oder im feuchten Zustand eine Gesamtheit der festen Bestandteile vermahlt, welche dieses anorganische feuerfeste Oxid und ggf. diese unlösliche Verbindung des Metalls B umfaßt, derart, daß ein Pulver mittlerer verminderter Granulometrie erhalten wird;
- eine Stufe (ii), in der man eine wässrige Suspension dieser festen vermahlenen Bestandteile, unter Zusatz wenigstens eines löslichen Eisensalzes und wenigstens eines löslichen Salzes des Cers, ggf. wenigstens eine unlösliche oder lösliche Verbindung des Metalls B, ggf. wenigstens ein auf wenigstens einem dieser festen vermahlenen Bestandteile vorimprägniertes Metall und ggf. wenigstens eine mineralische oder organische Säure zugibt;
- eine Stufe (iii), in der man die so gebildete Suspension reifen läßt;
- eine Stufe (iv), in der man die Suspension in einer Zerstäubervorrichtung zerstäubt und ein Pulver sammelt, und ggf.
- eine Stufe (v), in der man das so gesammelte Pulver kalziniert.

3. Verfahren nach Anspruch 2, dadurch gekennzeichnet, daß die mittlere Granulometrie des am Ausgang aus der Stufe (i) gesammelten Pulvers zwischen 0,1 und 100 Mikron, bevorzugt zwischen 1 und 20 Mikron, liegt.

4. Verfahren nach Anspruch 2 oder 3, dadurch gekennzeichnet, daß der potentielle Gehalt an Trockenmaterial der zu zerstäubenden Suspension zwischen 5 und 60 Gew-% und bevorzugt zwischen 10 und 50 Gew.-% beträgt.

5. Verfahren nach einem der Ansprüche 2 bis 4, dadurch gekennzeichnet, daß in der Stufe (iii) die Reifezeit der zu zerstäubenden Suspension zwischen 0,5 und 100 Stunden, bevorzugt zwischen 2 und 50 Stunden beträgt.

6. Verfahren nach einem der Ansprüche 2 bis 5, dadurch gekennzeichnet, daß in der Stufe (iii) die Reifetemperatur zwischen 0 und 50°C, bevorzugt zwischen 10 und 40°C beträgt.

7. Verfahren nach einem der Ansprüche 1 bis 6, dadurch gekennzeichnet, daß dieses feuerfeste anorganische Oxid gewählt ist aus der Gruppe, die gebildet wird durch Alphaaluminiumoxid, Gammaaluminiumoxid, Deltaaluminiumoxid, Etaaluminiumoxid, Thetaaluminiumoxid, Kappaaluminiumoxid, Roaluminiumoxid, Chialuminiumoxid, Siliziumoxid, Silizium- Aluminiumoxide, Zeolithe, Siliziumoxide-Magnesiumoxide, Titanoxid, Zirkoniumoxid und deren Gemische.

8. Verfahren nach einem der Ansprüche 1 bis 7, dadurch gekennzeichnet, daß der Gehalt an Ceroxid des nach Zerstäubung gewonnenen Pulvers zwischen 0,1 und 40 Gew.-%, bevorzugt zwischen 0,2 und 15 Gew.-% und privilegiert zwischen 0,5 und 6 Gew.-%, bestimmt nach Kalzinierung bei 1000°C, liegt.

9. Verfahren nach einem der Ansprüche 1 bis 8, dadurch gekennzeichnet, daß der Gehalt an Eisenoxid des nach Zerstäubung gewonnenen Pulvers zwischen 0,1 und 10 Gew.-%, bevorzugt zwischen 0,15 und 5 Gew.-% und privilegiert zwischen 0,2 und 2 Gew.-%, bestimmt nach Kalzinierung bei 1000°C, liegt.

10. Verfahren nach einem der Ansprüche 1 bis 9, dadurch gekennzeichnet, daß der Gehalt an Metallverbindung B des nach Zerstäubung gewonnenen Pulvers zwischen 0 und 10 Gew.-% und bevorzugt zwischen 0 und 5 Gew.-%, bestimmt nach Kalzinierung bei 1000°C, liegt.

11. Verfahren nach einem der Ansprüche 2 bis 10, dadurch gekennzeichnet, daß die Menge an mineralischer oder organischer Säure, die zur wässrigen Suspension in der Stufe (ii) gesetzt wurde, zwischen 0 und 5 Gew.-% und bevorzugt zwischen 0,5 und 3 Gew.-% der Suspension beträgt.

12. Verfahren nach einem der Ansprüche 1 bis 11, dadurch gekennzeichnet, daß in der Stufe (a) oder (iv) die Temperatur des heißen Gases bei Eintritt in die Zerstäubervorrichtung zwischen 100 und 900°C, bevorzugt zwischen 150 und 800°C und in vorteilhafter Weise zwischen 200 und 700°C liegt.

13. Verfahren nach einem der Ansprüche 1 bis 12, dadurch gekennzeichnet, daß in der Stufe (a) oder (iv) die Temperatur des am Austritt der Zerstäubervorrichtung gemessenen Gases zwischen 100 und 600°C, bevorzugt zwischen 150 und 500°C liegt.

14. Verfahren nach einem der Ansprüche 1 bis 13, dadurch gekennzeichnet, daß die Kalzinierungstemperatur des aus der Zerstäubervorrichtung stammenden Pulvers in der Stufe (a) oder (v) zwischen 150 und 900°C, bevorzugt zwischen 300 und 700°C liegt.

15. Verfahren nach einem der Ansprüche 1 bis 14, dadurch gekennzeichnet, daß dieser metallische Träger aus Stahl vom Typ Fecralloy oder vom alitierten Typ ist.

16. Verfahren nach einem der Ansprüche 1 bis 15, dadurch gekennzeichnet, daß dieser metallische Träger vor der Beschichtungsstufe (c) unter oxidierender Atmosphäre zwischen 700 und 1100°C und bevorzugt zwischen 750 und 1000°C behandelt wird.

17. Verfahren nach einem der Ansprüche 1 bis 16, dadurch gekennzeichnet, daß die Menge an mineralischem oder organischem Bindemittel, das der wässrigen Suspension in der Stufe (b) zugesetzt wurde, 0 bis 10% und bevorzugt 0,1 bis 5 Gew.-% dieser Suspension beträgt.

18. Verfahren nach einem der Ansprüche 1 bis 17, dadurch gekennzeichnet, daß die Menge an mineralischer oder organischer Säure, die der wässrigen Suspension in der Stufe (b) zugesetzt wurde, 0 bis 5 Gew.-% und bevorzugt 0,1 bis 2 Gew.-% dieser Suspension beträgt.

19. Verfahren nach einem der Ansprüche 1 bis 18, dadurch gekennzeichnet, daß in der Stufe (c) man den Träger mit dieser Suspension beschichtet, dann den Überschuß der in den Kanälen des Trägers vorhandenen Suspension eliminiert und man den in der Stufe (d) beschichteten Träger bei einer Temperatur zwischen 100 und 800°C und bevorzugt zwischen 200 und 700°C kalziniert.

20. Verfahren nach einem der Ansprüche 1 bis 19, dadurch gekennzeichnet, daß die Masse der abgeschiedenen porösen Schicht zwischen 20 und 200 g und bevorzugt zwischen 50 und 150 g pro Liter Träger beträgt.

21. Verfahren nach einem der Ansprüche 1 bis 20, dadurch gekennzeichnet, daß in der Stufe (e) der beschichtete Träger durch den Rest oder die Gesamtheit der Vorläufer an Metall A mit einem Globalgehalt zwischen 0,05 und 10 g, bevorzugt zwischen 0,1 und 5 g und vorteilhafter zwischen 0,5 und 2 g pro Liter Träger imprägniert wird.

22. Verfahren nach einem der Ansprüche 1 bis 21, dadurch gekennzeichnet, daß in der Stufe (f) die thermische Behandlung in neutraler oxidierender oder reduzierender Atmosphäre bei einer Temperatur zwischen 200 und 900°C, bevorzugt zwischen 300 und 700°C vorgenommen wird.
